# EUROPEAN PATENT APPLICATION

(11) **EP 3 395 888 A1**
(43) Date of publication of application: **31.10.2018**
(21) Application number: 16878988.1
(22) Date of filing: 22.12.2016
(51) Int. Cl.: C08L 27/12, B05D 7/24, C08J 3/20, C08K 3/08, C09D 5/03, C09D 7/12, C09D 127/12

(54) **POWDER FOR COATING, AND COATED ARTICLE**

(30) Priority: 25.12.2015 JP 2015254091
(71) Applicant: AGC Inc., Tokyo 100-8405 (JP)
(72) Inventor: SUSA, Hitoshi, Tokyo 100-8405 (JP); TATE, Noriharu, Tokyo 100-8405 (JP); HOSODA, Tomoya, Tokyo 100-8405 (JP)
(74) Representative: Müller-Boré & Partner Patentanwälte PartG mbB
(86) International application number: PCT/JP2016/088521
(87) International publication number: WO 2017/111102

(57) **Abstract**

To provide a powder for coating, whereby it is possible to form a coating film excellent in acid resistance. The powder comprises a fluororesin and particles of a composite oxide containing at least two metals selected from the group consisting of Cu, Mn, Co, Ni and Zn.

## Description

### TECHNICAL FIELD

The present invention relates to a powder for coating, and a coated article having a coating film formed by using the powder.

### BACKGROUND ART

A fluororesin is excellent in heat resistance, chemical resistance, weather resistance, etc., and thus is used in various fields such as the semiconductor industry, the automotive industry, the chemical industry, etc.

For example, by applying a powder containing a fluororesin on a substrate surface by such a technique as an electrostatic coating method, a fluidized immersion method or a rotary molding method, it is possible to form a coating film in order to improve the protection or the chemical resistance of the substrate surface.

In particular, a coating film to be formed on a surface to be in contact with an acidic solution, of e.g. various containers, pipes, stirring blades, etc. made of metal, is desired to be excellent in acid resistance in order to prevent corrosion of the metal.

Patent Document 1 relates to a molded article formed of a composition comprising a thermoplastic resin and a conductive metal oxide (e.g. tin oxide, indium oxide, etc.) and discloses a method of blending an acid acceptor in the composition in order to provide an acid rain counter-measure, for the molded article to be used outdoors.

As the acid acceptor, a composite metal compound such as hydrotalcite, zeolite or bentonite, or a metal compound such as magnesium hydroxide, magnesium oxide or zinc oxide, is exemplified.

### PRIOR ART DOCUMENT

### PATENT DOCUMENT

Patent Document 1: JP-A-2014-185284

### DISCLOSURE OF INVENTION

### TECHNICAL PROBLEM

However, in the case of a coating film to be provided on e.g. an inner surface of a piping, a higher acid resistance is required than the acid rain counter-measure as disclosed in Patent Document 1.

The present invention is to provide a powder capable of forming a coating film excellent in acid resistance, and a coated article having a coating film formed by using the powder.

### SOLUTION TO PROBLEM

The present invention has the following embodiments.
[1] A powder characterized by comprising a fluororesin and particles of a composite oxide containing at least two metals selected from the group consisting of Cu, Mn, Co, Ni and Zn.
[2] The powder according to [1], wherein the powder comprises particles of the fluororesin and the particles of the composite oxide.
[3] The powder according to [1] or [2], wherein the average particle size of a powder consisting of the particles of the composite oxide is from 0.01 µm to 50 µm.
[4] The powder according to [2] or [3], wherein the average particle size of a powder consisting of the particles of the fluororesin is from 1 to 1,000 µm.
[5] The powder according to [1], wherein the powder comprises particles containing said fluororesin and said composite oxide particles.
[6] The powder according to [5], wherein the average particle size of a powder consisting of the particles containing said fluororesin and said composite oxide particles is from 1 to 1,000 µm.
[7] The powder according to any one of [1] to [6], wherein the fluororesin is a fluororesin consisting of a fluorinated copolymer having units derived from a monomer represented by CF₂=CFX (X is F or CI).
[8] The powder according to [7], wherein the fluorinated copolymer is
   a copolymer having units derived from ethylene and units derived from tetrafluoroethylene,
   a copolymer having units derived from tetrafluoroethylene and units derived from a perfluoroalkyl vinyl ether, and having no units derived from ethylene,
   a copolymer having units derived from tetrafluoroethylene and units derived from hexafluoropropylene, and having no units derived from ethylene and no units derived from a perfluoroalkyl vinyl ether, or
   a copolymer having units derived from ethylene and units derived from chlorotrifluoroethylene, and having no units derived from tetrafluoroethylene.
[9] The powder according to any one of [1] to [8], wherein said composite oxide is a composite oxide containing Cu and Mn, or a composite oxide containing Co, Ni and Zn.
[10] An article comprising a substrate and a coating film formed from the powder as defined in any one of [1] to [9].
[11] The article according to [10], wherein the thickness of the coating film is from 5 to 10,000 µm.
[12] A method for producing a coated article, which comprises forming a primer layer on a substrate and then forming a top coating layer on the primer layer using the powder as defined in any one of [1] to [9], wherein the heat treatment temperature for forming the primer layer is from 80 to 200°C.
[13] The method for producing a coated article according to [12], wherein said primer layer consists of a film of a fluororesin containing no composite oxide particles.

### ADVANTAGEOUS EFFECTS OF INVENTION

The powder of the present invention is capable of forming a coating film excellent in acid resistance.

The coated article having a coating film formed by using the powder of the present invention is excellent in acid resistance.

### DESCRIPTION OF EMBODIMENTS

In this specification, a "unit" means a portion derived from a monomer, which is formed by polymerization of the monomer. A unit may be one formed directly by a polymerization reaction or may be one having a part of the unit converted to another structure by treating the polymer. Further, in the following, in some cases, a unit derived from an individual monomer may be referred to by a name having "unit" attached to its monomer name.

In the present invention, the "composite oxide" is a solid solution of a plurality of metal oxides.

### <Powder>

The powder of the present invention comprises a fluororesin and particles of a certain composite oxide (hereinafter referred to as a "composite oxide (Z)"). The powder of the present invention may be a powder comprising particles of the fluororesin and the particles of the composite oxide (Z), or may be a powder comprising particles containing the fluororesin and the composite oxide (Z) particles (in other words, particles of "the fluororesin containing the composite oxide (Z) particles"). Further, the powder comprising particles of "the fluororesin containing the composite oxide (Z) particles" may be a powder which further contains one or both of the fluororesin particles and the composite oxide (Z) particles.

The powder of the present invention may contain particles of two or more types of the composite oxide (Z). Further, the particles of "the fluororesin containing the composite oxide (Z) particles" may contain two or more types of the composite oxide (Z) particles. Further, the powder of the present invention may contain two or more types of the fluororesin particles, respectively containing different types of the composite oxide (Z) particles.

Further, the fluororesin in the powder of the present invention may be a fluororesin containing a component other than a fluororesin (e.g. an additive such as an ultraviolet absorber, etc.). The powder of the present invention may contain two or more types of particles consisting of different fluororesins. Moreover, even the same fluororesin may contain two or more types of particles of the fluororesin different in composition such that the component of an additive is different.

The powder of the present invention may further contain particles other than those described above (e.g. pigment particles which do not correspond to the composite oxide (Z) particles).

The powder of the present invention is preferably a powder comprising particles of the fluororesin and particles of the composite oxide (Z). Such a powder is obtainable by mixing a powder consisting of fluororesin particles and a powder of composite oxide (Z) particles. As the powder of composite oxide (Z) particles, a commercially available powder may be used, or a commercially available powder may be used by subjecting it to processing such as grain size regulation. As the powder consisting of fluororesin particles, a commercially available fluororesin powder may be used, or a base material (pellets, sheets, etc.) for the fluororesin may be powdered and then used.

Further, the powder consisting of particles of "the fluororesin containing the composite oxide (Z) particles" is obtainable by producing a fluororesin containing the composite oxide (Z) particles, and powdering this composite oxide (Z) particle-containing fluororesin.

### <Composite oxide>

The composite oxide (Z) is a composite oxide containing at least two metals selected from the group consisting of Cu, Mn, Co, Ni and Zn. A powder of the composite oxide (Z) is a collection of the composite oxide (Z) particles, and may be a collection containing two or more types of the composite oxides (Z) particles, as described above.

The specific surface area of the powder of the composite oxide (Z) is preferably from 5 to 80 m²/g, more preferably from 7 to 70 m²/g, particularly preferably from 20 to 60 m²/g. When the specific surface area is at least the lower limit value in the above range, the dispersibility in the fluororesin will be good, and when it is at most the upper limit value, aggregation of the composite oxide particles is less likely to occur.

The average particle size of the powder of the composite oxide (Z) is preferably from 0.001 µm to 100 µm, more preferably from 0.01 µm to 50 µm, particularly preferably from 0.01 to 10 µm. Within such a range, the dispersibility of the composite oxide in the fluorine resin will be excellent.

The average particle size of the powder of the composite oxide (Z) is a median diameter on a volume basis obtainable by measuring it by a laser diffraction scattering particle size distribution measuring apparatus.

As the composite oxide (Z), preferred is a composite oxide containing Cu and Mn, or a composite oxide containing Co, Ni and Zn.

The powder of the composite oxide (Z) may be suitably selected for use from commercially available composite oxide-type pigments.

Specific examples of the commercially available composite oxide (Z) powder include DAIPYROXIDE BLACK #9550, DAIPYROXIDE BLACK #3550 (both product names, manufactured by Dainichiseika Color & Chemicals Mfg. Co., Ltd., composition: Cu[Fe, Mn]O₄), Pigment Green 50 (product name, manufactured by Asahi Kasei Kogyo Co., Ltd., composition: composite oxide containing Co, Zn, Ni and Ti), etc.

The content of the composite oxide (Z) particles in the powder of the present invention is preferably from 0.05 to 20 mass%, more preferably from 0.05 to 15 mass%, further preferably from 0.1 to 10 mass%, to the powder. When the content is within such a range, the mixing properties with the fluororesin or its powder will be excellent, and in the case of being melt kneaded with the fluororesin, the melt-kneadability will be excellent. Further, the coating film will be excellent in acid resistance.

### <Fluororesin>

The fluororesin contained in the powder of the present invention is solid at room temperature (25°C). As the fluororesin, it is possible to use a fluororesin known in the field of powder coating materials.

In the present invention, the average particle size in the powder consisting of the fluororesin particles or the powder consisting of particles of "the fluororesin containing the composite oxide (Z) particles", is not particularly limited, but it is, for example, preferably from 1 to 1,000 µm, more preferably from 1 to 300 µm, further preferably from 3 to 300 µm, particularly preferably from 5 to 200 µm. When the average particle size is at least 1 µm, since the deposition amount at the time of coating increases, the adhesive force and durability will be stabilized, and when it is at most 1,000 µm, shedding of particles after coating is less likely to occur, and the coating film tends to have a good surface smoothness.

The average particle size of the powder of the fluororesin is a median diameter on a volume basis obtainable by measuring it by a laser diffraction scattering particle size distribution measuring apparatus.

### [Fluorinated copolymer]

The fluororesin is preferably a fluororesin consisting of a fluorinated copolymer having at least one type of units derived from a monomer represented by CF₂=CFX (X is F or Cl, hereinafter referred to as the formula (I)) and at least one type of units derived from a monomer other than the monomer represented by the formula (I).

The monomer represented by the formula (I) is tetrafluoroethylene (hereinafter referred to also as "TFE") or chlorotrifluoroethylene.

Other monomer may be one copolymerizable with the monomer represented by the formula (I). For example, it is preferably at least one type selected from the following monomers (1) to (9).
Monomer (1): Ethylene (hereinafter, ethylene units may be referred to also as "E units")
Monomer (2): An olefin e.g. a C₃ olefin such as propylene, a C₄ olefin such as butylene or isobutylene, etc.
Monomer (3): A compound represented by CH₂=CX(CF₂)ₙY (provided that X and Y are each independently a hydrogen atom or a fluorine atom, and n is an integer of from 2 to 8). For example, CH₂=CF(CF₂)ₙF, CH₂=CF(CF₂)ₙH, CH₂=CH(CF₂)ₙF, CH₂=CH(CF₂)ₙH or the like. The integer n is preferably from 3 to 7, more preferably from 4 to 6.
Monomer (4): A fluoroolefin having hydrogen atoms in an unsaturated group such as vinylidene fluoride, vinyl fluoride, trifluoroethylene or hexafluoroisobutylene (but excluding the monomer (3)).
Monomer (5): A fluoroolefin having no hydrogen atom in an unsaturated group such as hexafluoropropylene (but excluding the monomer represented by the formula (I)).
Monomer (6): A perfluoro(alkyl vinyl ether) such as perfluoro(methyl vinyl ether), perfluoro(ethyl vinyl ether), perfluoro(propyl vinyl ether) or perfluoro(butyl vinyl ether).
Monomer (7): A perfluorovinyl ether having two unsaturated bonds such as CF₂=CFOCF₂CF=CF₂ or CF₂=CFO(CF₂)₂CF=CF₂.
Monomer (8): A fluorinated monomer having an aliphatic ring structure such as perfluoro(2,2-dimethyl-1,3-dioxole), 2,2,4-trifluoro-5-trifluoromethoxy-1,3-dioxole or perfluoro(2-methylene-4-methyl-1,3-dioxolane).
Monomer (9): A monomer having a polar functional group and having no fluorine atom (hereinafter referred to also as a polar functional group-containing monomer). The polar functional group contributes to improvement of adhesion.

The polar functional group may, for example, be a hydroxy group, a carboxy group, an epoxy group or an acid anhydride residue, and among them, an acid anhydride residue is preferred.

Specific examples of the polar functional group-containing monomer include a vinyl ether having a hydroxy group or an epoxy group such as hydroxybutyl vinyl ether or glycidyl vinyl ether, a monomer having a carboxy group such as maleic acid, itaconic acid, citraconic acid or undecylenic acid, a monomer having an acid anhydride residue such as maleic anhydride, itaconic anhydride, citraconic anhydride or himic anhydride, etc.

As the fluorinated copolymer, the following copolymers are preferred:
a copolymer having E units and TFE units (hereinafter referred to also as "ETFE"),
a copolymer having TFE units and perfluoroalkyl vinyl ether units and having no E units (hereinafter referred to also as "PFA"),
a copolymer having TFE units and hexafluoropropylene units and having neither E units nor perfluoroalkyl vinyl ether units (hereinafter referred to also as "FEP"),
a copolymer having E units and chlorotrifluoroethylene units and having no TFE units (hereinafter referred to also as "ECTFE").

In ETFE, the proportion of E units to the total of E units and TFE units is preferably from 20 to 70 mol%, more preferably from 25 to 60 mol%, further preferably from 35 to 55 mol%.

When E units are at least the lower limit value in the above range, the mechanical strength will be excellent, and when they are at most the upper limit value, the chemical resistance will be excellent.

ETFE may be a copolymer consisting solely of E units and TFE units, or may contain in addition to them at least one type of other monomer units.

A preferred example of other monomer units may be the above-mentioned monomer (3). In particular, CH₂=CH(CF₂)₂F, or CH₂=CH(CF₂)₄F ((perfluorobutyl) ethylene, hereinafter referred to as PFBE) is preferred.

In a case where other monomer units are contained, their total content is preferably from 0.1 to 10 mol, more preferably from 0.1 to 5 mol, further preferably from 0.2 to 4 mol, by a molar ratio to 100 mol of the total of E units and TFE units. When the content of such other monomer units is at least the lower limit value in the above range, the cracking resistance will be good, and when it is at most the upper limit value, the melting point of the fluororesin will be lowered, and the heat resistance of the molded article will be lowered.

In PFA, the proportion of TFE units to the total of TFE units and perfluoroalkyl vinyl ether units is preferably from 9 to 99 mol%, more preferably from 99 to 80 mol%, further preferably from 99 to 90 mol%.

When the proportion of TFE units is at least the lower limit value in the above range, the chemical resistance will be excellent, and when it is at most the upper limit value, the melt processability will be excellent.

PFA may be a copolymer consisting solely of TFE units and perfluoro alkyl vinyl ether units, or may contain in addition to them at least one type of other monomer units.

A preferred example of such other monomer may be hexafluoropropylene.

In a case where other monomer units are contained, their content is preferably from 0.1 to 10 mol, more preferably from 0.1 to 6 mol, further preferably from 0.2 to 4 mol, by a molar ratio to 100 mol of the total of TFE units and perfluoro alkyl vinyl ether units. When the content of other monomer units is at least the lower limit value in the above range, the melt viscosity is high whereby the moldability will be good, and when it is at most the upper limit value, cracking resistance will be good.

In FEP, the proportion of TFE units to the total of TFE units and hexafluoropropylene units is preferably from 99 to 70 mol%, more preferably from 99 to 80 mol%, further preferably from 99 to 90 mol%.

When the proportion of the TFE units is at least the lower limit value in the above range, the chemical resistance will be excellent, and when it is at most the upper limit value, the melt processability will be excellent.

FEP may be a copolymer consisting solely of TFE units and hexafluoropropylene units, or may contain in addition to them at least one type of other monomer units.

A preferred example of other monomer may be a perfluoroalkyl vinyl ether.

In a case where other monomer units are contained, their total content is preferably from 0.1 to 10 mol, more preferably from 0.1 to 6 mol, further preferably from 0.2 to 4 mol, by a molar ratio to 100 mol of the total of TFE units and hexafluoropropylene units. When the content of such other monomer units is at least the lower limit value in the above range, the melt viscosity will be high, whereby the moldability will be good, and when it is at most the upper limit value, the cracking resistance will be good.

In ECTFE, the proportion of E units to the total of E units and chlorotrifluoroethylene units is preferably from 2 to 98 mol%, more preferably from 10 to 90 mol%, further preferably from 30 to 70 mol%.

When the proportion of E units is at least the lower limit value in the above range, the chemical resistance will be excellent, and when it is at most the upper limit value, the gas barrier properties will be excellent.

ECTFE may be a copolymer consisting solely of E units and chlorotrifluoroethylene units, or may contain in addition to them other monomer units.

A preferred example of other monomer may be a perfluoroalkyl vinyl ether.

In a case where other monomer units are contained, their total content is preferably from 0.1 to 10 mol, more preferably from 0.1 to 5 mol, further preferably from 0.2 to 4 mol, by a molar ratio to 100 mol of the total of the E units and chlorotrifluoroethylene units. When the content of such other monomer units is at least the lower limit value in the above range, the cracking resistance will be good, and when it is at most the upper limit value, the melting point of the fluororesin will be lowered, and the heat resistance of the molded article will be lowered.

### [Method for producing powder of fluororesin]

The powder consisting of the fluororesin particles can be produced by a known production method. For example, a method of synthesizing a fluororesin, followed by subjecting it to pulverization treatment, or a method of preparing a dispersion of a fluororesin, followed by spraying and drying it, may be mentioned. As the case requires, the powder may be classified by means of a sieve or air flow to adjust the particle size.

In the case of a powder consisting of particles of "the fluororesin containing the composite oxide (Z) particles", it is preferably produced in such a manner that the fluororesin and the composite metal oxide (Z) powder were melt-kneaded in a melt kneader, followed by pulverization.

### <Other components>

The powder of the present invention may contain, within a range not to impair the effects of the present invention, components other than the above-described fluororesin and composite oxide (Z) particles. Other components may be contained in the fluororesin so that they are contained in the powder of the present invention as particles of the fluororesin containing such components. Otherwise, in a case where other components are in the form of a powder, they may be contained in the powder of the present invention as particles of such components.

Other components may be additives such as a pigment that does not correspond to the composite oxide (Z), a flow improver (silica, alumina, etc.), a reinforcing material (inorganic filler), a heat stabilizer (cuprous oxide, cupric oxide, cuprous iodide, cupric iodide, etc.) and an ultraviolet absorber.

Further, in a case where the fluororesin is a fluorinated copolymer containing units based on a polar functional group-containing monomer, it is also preferred to use, as other component, a compound having reactivity with the polar functional group (which may be referred to also as a curing agent).

As the curing agent, an aliphatic polyamine, a modified aliphatic polyamine, an aromatic polyamine, dicyandiamide, or the like, may be mentioned.

In a case where other components are contained, the content thereof is preferably from 0.01 to 10 parts by mass, more preferably from 0.05 to 8 parts by mass, further preferably from 0.1 to 6 parts by mass, to 100 parts by mass of the total of the fluororesin and the composite oxide (Z).

### <Method for producing powder>

In a case where the fluororesin, the composite oxide (Z) and other components to be blended as the case requires, are respectively in the form of powders, the powder of the present invention may be obtained by mixing them.

The method for mixing powders may be a dry blending method by using e.g. a V-type blender, a double cone blender, a container blender, a drum blender, a horizontal cylindrical type mixer, a ribbon mixer, a paddle mixer, a screw mixer, etc.

In the powder, other components may be contained as a powder, or may be contained in the fluororesin particles. In a case where other components are to be contained in the fluororesin particles, it is preferred that the fluororesin and other components are melt-kneaded in a melt kneader, and then pulverized by a pulverizer, to obtain a powder consisting of fluororesin particles containing such other components. The melt kneader may be a biaxial extruder or the like.

Further, as the pulverizer, a cutter mill, a hammer mill, a pin mill, a jet mill or the like may be mentioned.

### <Coated article>

The coated article of the present invention comprises a substrate and a coating film formed from the powder of the present invention.

### [Substrate]

The material for the substrate is not particularly limited, but a metal is preferred in that the effect to be protected by a coating film excellent in acid resistance is thereby large. The metal may, for example, be iron, stainless steel, aluminum, copper, tin, titanium, chromium, nickel, zinc, etc. Particularly from the viewpoint of being inexpensive and having high strength, stainless steel or aluminum is preferred.

The substrate may also be a substrate having, on the surface to be coated, a plated layer, a primer layer, a coating layer (other than a coating film formed from the powder of the present invention), or other layer or film consisting of other metal or a material other than a metal.

The shape or application of the substrate is not particularly limited. Examples of the substrate include pipes, tubes, films, plates, tanks, rolls, vessels, valves, elbows, etc.

Examples of the application of the substrate include various containers, pipes, tubes, tanks, pipings, fittings, rolls, autoclaves, heat exchangers, distillation columns, jigs, valves, stirring blades, tank trucks, pumps, blower casings, centrifuges, cooking equipment, etc.

### [Coating film]

The coating film is a film consisting of one having the powder melted and cooled.

The thickness of the coating film is preferably at least 5 µm, more preferably at least 30 µm, further preferably at least 50 µm, particularly preferably at least 80 µm, with a view to protection of the substrate. The upper limit for the thickness is not particularly limited, but if too thick, due to the difference in thermal expansion coefficient from the substrate, a strain stress is likely to form at the interface between the substrate and the coating film, whereby the coating film is likely to be peeled off. Also, multiple coating times will be required, whereby the productivity tends to be low, and the cost becomes high. From the viewpoint of preventing these disadvantages, the thickness of the coating film is preferably at most 10,000 µm, more preferably at most 5,000 µm, further preferably at most 3,000 µm, particularly preferably at most 2,000 µm.

### [Method for producing coating film]

The coating film may be formed by a method of applying the powder on a substrate to form a powder layer, melting the powder layer by heat-treatment, followed by cooling and solidification. It may be formed also by a method wherein while melting the powder, it is deposited on a substrate, followed by, as the case requires after further heat treatment, cooling and solidification.

The method for applying the powder is not particularly limited, but a known powder coating method such as an electrostatic coating method, a fluidized immersion method or a rotary molding method, may be applied. An electrostatic coating method is preferred in that coating may be carried out simply in a uniform thickness.

A coating film having a desired thickness may be formed by repeating a process of forming a powder layer, followed by heat treatment, in a plurality of times.

In a case where the fluororesin is a fluorinated copolymer containing units based on a polar functional group-containing monomer, and the powder contains a curing agent, it is preferred to cure the coating film in the process of heat-treating the powder layer for melting.

The above heat treatment may be carried out by an optional heating means such as an electric furnace, a gas furnace or an infrared heating oven, set at a predetermined temperature.

The above heat treatment temperature is not particularly limited so long as it is a temperature capable of melting and homogenizing the powder, but it is preferred to select an appropriate heat treatment temperature or heat treatment time particularly depending upon the type of the fluororesin in the powder. For example, if the heat treatment temperature is too high, there is a risk that an unfavorable effect such as modification of the fluororesin, etc. may occur, and on the other hand, if the heat treatment temperature is too low, there may be a case where a coating film having good physical properties cannot be formed.

For example, in a case where the fluororesin in the powder is ETFE, the heat treatment temperature is preferably from 260 to 340°C, more preferably from 265 to 320°C, particularly preferably from 270 to 310°C. When the heat treatment temperature is at least 260°C, voids or bubbles remaining due to insufficient firing are less likely to result, and when it is at most 340°C, discoloration or foaming tends to hardly occur. The heat treatment time varies depending upon the heat treatment temperature, but the heat treatment is preferably from 1 to 180 minutes, more preferably from 5 to 120 minutes, particularly preferably from 10 to 60 minutes. When the heat treatment time is at least 1 minute, bubbles remaining due to insufficient firing are less likely to result, and when it is at most 180 minutes, discoloration or sagging is less likely to occur.

In a case where the fluororesin in the powder is PFA, the heat treatment temperature is preferably at least 350°C and less than 380°C. When the heat treatment temperature is at least 350°C, adhesion between the fluororesin layer to be formed and the substrate will be excellent. When the heat treatment temperature is less than 380°C, it is possible to prevent foaming or cracking from taking place in the fluororesin layer, and to obtain a laminate excellent in outer appearance. The heat treatment temperature is preferably from 350 to 375°C, more preferably from 350 to 370°C.

When firing is conducted twice or more, the respective firing heat treatments may be conducted at different temperatures or at the same temperature.

The coated article of the present invention may have a layered structure having a top coating layer formed via a primer layer on a substrate, wherein the top coating layer is a coating film formed from the powder of the present invention. The primer layer and the top coating layer are different in material. The primer layer is preferably made of a material excellent in adhesiveness.

Further, on the surface of the top coating layer, a coating layer of an organic or inorganic material being a material different from the top coating layer (hereinafter referred to also as a "further coating layer") may be laminated.

### [Primer layer]

The primer layer may be formed by using a known primer. As the primer, preferred is a primer capable of forming a film of a fluororesin in order to enhance the adhesion to a coating film to be formed from the powder of the present invention. As the fluororesin, preferred is a fluororesin of the same type as the fluororesin in the powder of the present invention. For example, a fluororesin such as ETFE or the like, may be mentioned.

Further, the primer may contain other components within a range not to impair the effects of the present invention. Other components may be those as described above as other components in the powder of the present invention.

The thickness of the primer layer is preferably from 1 to 1,000 µm, more preferably from 5 to 500 µm, further preferably from 10 to 200 µm.

From the viewpoint of a high coating efficiency, the primer is preferably a liquid consisting of e.g. a solution or dispersion of the fluororesin. For example, Fluon (registered trademark) IL-300J (trade name, manufactured by Asahi Glass Company, Limited) as a dispersion of ETFE, may be mentioned. By applying such a primer to a substrate, followed by heating to evaporate and remove a solvent or dispersion medium, a primer layer will be formed. It is preferred that after removal of the solvent or dispersion medium, heat treatment is conducted to improve the adhesion to the substrate thereby to form a primer layer having good physical properties. The heat treatment may be carried out subsequent to removal of the solvent, etc.

The heat treatment at the time of forming the primer layer may be conducted by an optional heating means such as an electric furnace, a gas furnace or an infrared heating oven set at a predetermined temperature. The heat treatment temperature is preferably from 50 to 340°C, more preferably from 60 to 320°C, particularly preferably from 70 to 310°C. When the heat treatment temperature is at least 50°C, a decrease in adhesion, remaining of bubbles or insufficient drying due to insufficient firing is less likely to result, and when it is at most 340°C, discoloration or foaming tends to be suppressed. The heat treatment time varies depending on the heat treatment temperature, but the heat treatment is conducted preferably for from 1 to 180 minutes, more preferably from 5 to 120 minutes, particularly preferably from 10 to 60 minutes. When the heat treatment time is at least 1 minute, a decrease in adhesion or remaining of bubbles due to insufficient firing, is less likely to result, and when it is at most 180 minutes, discoloration or foaming tends to be suppressed.

Further, in a case where the fluororesin in the primer is ETFE, sufficient adhesion can be obtained even if the heat treatment temperature is lowered. In such a case, the heat treatment temperature is preferably from 70 to 250°C, more preferably from 80 to 200°C. The heat treatment time is preferably from 5 to 60 minutes, more preferably from 10 to 30 minutes.

### [Further coating layer]

As the further coating layer, a colored layer, a hard coating layer, the permeation-preventing layer or the like may be mentioned.

As the further coating layer, a layer containing a fluororesin and containing no composite oxide (Z) is preferred.

The thickness of the further coating layer is not particularly limited, but is preferably at most 1,000 µm, more preferably at most 500 µm. The lower limit value of the thickness may be at least a thickness whereby the effect due to the provision of the further coating layer is sufficiently obtainable. For example, at least 10 µm is preferred, and at least 30 µm is more preferred.

The coating film formed from the powder of the present invention is excellent in acid resistance. Even in an application where in the case of a coating film of the conventional powder coating material, it is required to increase the thickness of the coating film in order to obtain a good acid resistance, the coating film formed from the powder of the present invention is excellent in acid resistance even if the film thickness is thin. Further, also in an application where the coating film of the conventional powder coating material cannot be applied since the acid resistance is insufficient, the coating film formed from the powder of the present invention can be applied.

An article having such a coating film is excellent in acid resistance, since deterioration by an acid is suppressed at the surface covered with the coating film.

### EXAMPLES

In the following, the present invention will be described in further detail with reference to Examples, but the present invention is not limited to these Examples.

Compounds used in the following Examples are as follows.

Fluororesin powder (A): A powder (average particle size: from 80 to 120 µm) of ETFE (molar ratio of TFE units/E units/PFBE units: 54/46/2) containing 1.5 ppm (0.00015 mass%) of CuO as a heat stabilizer.

Fluororesin powder (B): A powder (average particle size: from 30 to 70 µm) of ETFE (molar ratio of TFE units/E units/PFBE units: 60/40/3).

Fluororesin powder (C): A powder (average particle size: from 20 to 30 µm) of PFA (molar ratio of TFE units/perfluoropropyl vinyl ether units/5-norbornene-2,3-dicarboxylic anhydride units: 97.9/2.0/0.1).

Inorganic powder (1): A powder of a composite oxide. Manufactured by Dainichiseika Color & Chemicals Mfg. Co., Ltd., product name: DAIPYROXIDE BLACK #9550, composition: Cu[Fe, Mn]O₄, specific surface area: 26 m²/g, average particle size: 1 µm.

Inorganic powder (2): A powder of a composite oxide. Manufactured by Dainichiseika Color & Chemicals Mfg. Co., Ltd., product name: DAIPYROXIDE BLACK #3550, composition: Cu[Fe, Mn]O₄, specific surface area: 45 m²/g, average particle size: 60 nm.

Inorganic powder (3): A powder of an oxide-type pigment, manufactured by Furukawa Denshi Co., Ltd., product name: S-300, composition: CuO, specific surface area: 10 m²/g, average particle size: 7.2 µm.

Inorganic powder (4): Carbon black powder, manufactured by Mitsubishi Chemical Corporation, product name: #45L, specific surface area: 110 m²/g, average particle size: 24 nm.

Inorganic powder (5): Carbon black powder, manufactured by Denki Kagaku Kogyo Kabushiki Kaisha, product name: Denka Black, specific surface area: 69 m²/g, average particle size: 35 nm.

Inorganic powder (6): Graphite powder, manufactured by Timcal Ltd., product name: KS75, specific surface area: 6.5 m²/g, average particle size: 28 µm.

Inorganic powder (7): A powder of an oxide-type pigment, manufactured by Dainichiseika Color & Chemicals Mfg. Co., Ltd., product name: TM Yellow 8170, composition: FeOOH, specific surface area: 80 m²/g, average particle size: 70 nm.

Inorganic powder (8): A powder of an oxide-type pigment, manufactured by Dainichiseika Color & Chemicals Mfg. Co., Ltd., product name: TM Red 8270, composition: Fe₂O₃, specific surface area: 80 m²/g, average particle size: 70 nm.

Liquid primer (1): Manufactured by Asahi Glass Company, Limited, product name: Fluon (registered trademark) IL-300J).

### <Ex 1 to 12: Production of powder for coating>

A powder for coating was produced by mixing the fluororesin and the inorganic powder in the formulation shown in Table 1.

Ex. 1 to 5 are Examples wherein the powder of the composite oxide (Z) is contained, and Ex. 6 to 11 are Comparative Examples wherein an inorganic powder other than the composite oxide (Z) is contained.

Specifically, in a plastic bag with a zipper, the fluororesin powder was weighed and then the inorganic powder was weighed, followed by preliminary mixing. After the preliminary mixing, the entire amount was put into a juicer mixer and stirred for 30 seconds. After taking it out from the bag, it was again put into a juicer mixer and stirred for 30 seconds to obtain a powder for coating.

Using the powder in each Ex., a coated test specimen was produced by the following method, whereupon evaluations of the initial adhesion, the heat resistance and the acid resistance were conducted. The results are shown in Table 1.

Here, Ex. 12 is an example wherein only the fluororesin powder (A) was used.

### <Production of coated test specimen>

The surface of a SUS304 stainless steel plate with a length of 40 mm, a width of 150 mm and a thickness of 2 mm, was subjected to sandblast treatment by means of alumina particles of 60 mesh, so that the surface roughness Ra would be from 5 to 10 µm, and then cleaned with ethanol, to prepare a test substrate.

On the surface of the test substrate, the liquid primer (1) was applied by using an air spray gun for a liquid coating material (manufactured by Meiji Air Compressor Mfg. Co., Ltd.) and fired at 300°C for 30 minutes as hanged in an oven, to form a primer layer having a thickness of 23 µm, thereby to obtain a primer layer-attached substrate.

Here, so that at one end in the transverse direction of the test substrate, a portion having no primer layer (a portion which would be a gripping margin during the peeling test) would be formed, a portion with a lateral width of 20 mm was preliminarily masked.

Then, after forming the primer layer, the masking was removed, and to the entire surface of the primer layer-attached substrate, the powder of each Ex. was sprayed by electrostatic coating and fired at 275°C for 15 minutes. Such an electrostatic coating and firing step was repeated three times to form a top coating layer. Further, the fluororesin powder (A) was electrostatically applied on the surface of the top coating layer and fired at 275°C for 15 minutes, to form the outermost layer (further coating layer), thereby to obtain a coated test specimen.

The thickness of the top coating layer was 200 µm, and the total thickness of the top coating layer and the outermost layer was 250 µm.

### <Evaluation method>

### [Evaluation of initial adhesion]

In the coating film formed on the coated test specimen, parallel cuts in the transverse direction were made at 10 mm intervals by using a cutter knife. At the portion having no primer layer at one end portion of the coated test specimen, the outermost layer and the top coating layer were peeled from the substrate, to form a gripping margin. The gripping margin was fixed to a chuck of a tensile tester, and the 90° peel strength (unit: N/cm) was measured at a pulling speed of 50 mm/min., and the obtained value was recorded as the initial peel strength. Based on that value, the initial adhesion was evaluated in accordance with the following standards. D rank was deemed to be unacceptable.

At least 50.0 N/cm: A rank
At least 35.0 and less than 50.0 N/cm: B rank
At least 20.0 and less than 35.0 N/cm: C rank
Less than 20.0 N/cm: D rank.

### [Hot water resistance test]

The coated test specimen was treated at 130°C for 24 hours by a pressure cooker (hot steam pressure cooker), and in the same manner as in the initial adhesion evaluation, the 90° peel strength (unit: N/cm) was measured. The obtained value was recorded as the peel strength after the hot water resistance test, and based on that value, the hot water resistance was evaluated. The evaluation standards were the same as for the initial adhesion.

### [Acid resistance test]

The coated test specimen was immersed in an aqueous hydrochloric acid solution at a concentration of 35% at room temperature for 40 hours, and then, in the same manner as in the initial adhesion evaluation, the 90° peel strength (unit: N/cm) was measured. The obtained value was recorded as the peel strength after the acid resistance test, and based on that value, the acid resistance was evaluated. The evaluation standards were the same as for the initial adhesion.

**[Table 1]**

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|---|
| Powders | Fluororesin powder | | (A) | (A) | (A) | (A) | (B) | (A) | (A) | (A) | (A) | (A) | (A) | (A) |
| | Inorganic powder | Composite oxide powder | (1) | (1) | (2) | (2) | (1) | - | - | - | - | - | - | - |
| | | Other powder | - | - | - | - | - | (3) | (4) | (5) | (6) | (7) | (8) | - |
| | | Content [mass%] | 0.30 | 0.20 | 0.30 | 0.20 | 0.30 | 0.02 | 0.10 | 0.10 | 0.10 | 10 | 10 | - |
| Evaluations | Initial adhesion | Peel strength [N/cm] | 68.7 | 65.2 | 51.0 | 75.7 | 59.2 | 92.0 | 75.1 | 71.9 | 75.8 | 56.5 | 38.3 | 56.0 |
| | | Rank | A | A | A | A | A | A | A | A | A | A | B | A |
| | Hot water resistance | Peel strength [N/cm] | 53.8 | 52.1 | 50.7 | 68.2 | 51.4 | 43.9 | 50.9 | 72.4 | 53.1 | 12.6 | 13.0 | 51.1 |
| | | Rank | A | A | A | A | A | B | A | A | A | D | D | A |
| | Acid resistance | Peel strength [N/cm] | 68.6 | 68.4 | 55.1 | 69.1 | 56.6 | 5.8 | 1.3 | 1.9 | 0.9 | 37.1 | 27.2 | 1.7 |
| | | Rank | A | A | A | A | A | D | D | D | D | B | C | D |

As shown by the results in Table 1, in Ex. 12 wherein the powder consisted solely of the fluororesin powder (A), the initial adhesion was good, but the peel strength decreased substantially in the acid resistance test. Since there was no change in the coating film (outermost layer and top coating layer), the decrease in the peel strength is considered to mean that the primer layer as the lower layer in the coating film formed from the powder underwent deterioration.

Whereas, in Ex. 1 to 4 wherein a powder comprising the fluororesin powder (A) and the composite oxide (Z) powder, was used, the peel strength was maintained at a high value even after being immersed in the aqueous hydrochloric acid solution in the acid resistance test. That is, it is considered that the acid resistance of the top coating layer was excellent, and deterioration of the primer layer was suppressed.

Further, in Ex. 1 to 4, even after exposure to high-temperature steam in the hot water resistance test, the peel strength of the coating film was maintained at a high value, and the hot water resistance of the coating film was excellent.

Also in Ex. 5 wherein a powder comprising the composite oxide (Z) powder and the fluororesin powder (B) containing no thermal stabilizer, like in Ex. 1 to 4, the acid resistance and the hot water resistance of the coating film were excellent.

On the other hand, in Ex. 6 to 11 wherein a powder comprising the fluororesin powder (A) and an inorganic powder other than the composite oxide (Z), was used, the peel strength decreased in the acid resistance test, and the acid resistance of the coating film was inferior.

A powder was produced in the same manner as in Ex. 1 to 12, except that at the time of forming the primer layer, the heat treatment temperature and the heat treatment time were made as set forth in Table 2 and the powder was made to have a composition as set forth in Table 2, and various evaluations were conducted. The results are shown in Table 2.

**[Table 2]**

| | | | Ex. 13 | Ex. 14 | Ex. 15 | Ex. 16 | Ex. 17 | Ex. 18 | Ex. 19 | Ex. 20 |
|---|---|---|---|---|---|---|---|---|---|---|
| Powders | Fluororesin powder | | (A) | (A) | (A) | (A) | (A) | (A) | (A) | (A) |
| | Inorganic powder | Composite oxide powder | (1) | (1) | (1) | (1) | - | - | - | - |
| | | Content [mass%] | 0.30 | 0.30 | 0.30 | 0.30 | - | - | - | - |
| | Heat treatment temperature for primer layer [°C] | | 80 | 80 | 200 | 200 | 80 | 80 | 200 | 200 |
| | Heat treatment time for primer layer [minutes] | | 10 | 30 | 10 | 30 | 10 | 30 | 10 | 30 |
| | Film thickness [µm] | | 249 | 226 | 264 | 297 | 254 | 229 | 238 | 297 |
| Evaluations | Initial adhesion | Peel strength [N/cm] | 46.8 | 51.6 | 59.9 | 43.0 | 63.7 | 56.7 | 58.1 | 81.7 |
| | | Rank | B | A | A | B | A | A | A | A |
| | | Film thickness [µm] | 266 | 234 | 310 | 243 | 262 | 260 | 230 | 301 |
| | Hot water resistance | Peel strength [N/cm] | 43.7 | 46.1 | 52.2 | 42.8 | 4.2 | 3.2 | 18.3 | 10.2 |
| | | Rank | B | B | A | B | D | D | D | D |
| | | Film thickness [µm] | 296 | 254 | 297 | 241 | 250 | 243 | 251 | 287 |
| | Acid resistance | Peel strength [N/cm] | 48.2 | 49.4 | 51.6 | 46.5 | 1.8 | 1.4 | 1.9 | 1.9 |
| | | Rank | B | B | A | B | D | D | D | D |

As shown by the results in Table 2, with the powder of the present invention, even by shortening the heat treatment time and at the same time by lowering the heat treatment temperature of the primer layer, the coating film was excellent in heat resistance and hot water resistance.

A powder for coating was made to have a composition as shown in Table 3, and without forming the primer layer, using the powder, heat treatment at 350°C for 6 minutes was repeated 5 times, and then, heat treatment at 350°C for 4 minutes was conducted once, to form a top coating layer. A coating film was formed in the same manner as in Ex. 1 to 12 except that no outermost layer was formed, and various evaluations were conducted. The results are shown in Table 3.

**[Table 3]**

| | | | Ex. 21 | Ex. 22 |
|---|---|---|---|---|
| Powders | Fluororesin powder | | (C) | (C) |
| | Inorganic powder | Composite oxide powder | (1) | - |
| | | Content [mass%] | 0.30 | - |
| | Film thickness [µm] | | 151 | 199 |
| Evaluations | Initial adhesion | Peel strength [N/cm] | 9.9 | 14.7 |
| | | Film thickness [µm] | 142 | 218 |
| | Hot water resistance | Peel strength [N/cm] | 5.5 | 3.8 |
| | | Film thickness [µm] | 132 | 184 |
| | Acid resistance | Peel strength [N/cm] | 8.6 | 1.2 |

As shown by the results in Table 3, the powder of the present invention was excellent in heat resistance and hot water resistance as compared with those not containing a composite oxide (Z), even if the type of the fluororesin was changed.

The entire disclosure of Japanese Patent Application No. 2015-254091 filed on December 25, 2015 including specification, claims, drawings and summary is incorporated herein by reference in its entirety.

## Claims

1. A powder **characterized by** comprising a fluororesin and particles of a composite oxide containing at least two metals selected from the group consisting of Cu, Mn, Co, Ni and Zn.

2. The powder according to Claim 1, wherein the powder comprises particles of the fluororesin and the particles of the composite oxide.

3. The powder according to Claim 1 or 2, wherein the average particle size of a powder consisting of the particles of the composite oxide is from 0.01 µm to 50 µm.

4. The powder according to Claim 2 or 3, wherein the average particle size of a powder consisting of the particles of the fluororesin is from 1 to 1,000 µm.

5. The powder according to Claim 1, wherein the powder comprises particles containing said fluororesin and said composite oxide particles.

6. The powder according to Claim 5, wherein the average particle size of a powder consisting of the particles containing said fluororesin and said composite oxide particles is from 1 to 1,000 µm.

7. The powder according to any one of Claims 1 to 6, wherein the fluororesin is a fluororesin consisting of a fluorinated copolymer having units derived from a monomer represented by CF₂=CFX (X is F or CI).

8. The powder according to Claim 7, wherein the fluorinated copolymer is
a copolymer having units derived from ethylene and units derived from tetrafluoroethylene,
a copolymer having units derived from tetrafluoroethylene and units derived from a perfluoroalkyl vinyl ether, and having no units derived from ethylene,
a copolymer having units derived from tetrafluoroethylene and units derived from hexafluoropropylene, and having no units derived from ethylene and no units derived from a perfluoroalkyl vinyl ether, or
a copolymer having units derived from ethylene and units derived from chlorotrifluoroethylene, and having no units derived from tetrafluoroethylene.

9. The powder according to any one of Claims 1 to 8, wherein said composite oxide is a composite oxide containing Cu and Mn, or a composite oxide containing Co, Ni and Zn.

10. An article comprising a substrate and a coating film formed from the powder as defined in any one of Claims 1 to 9.

11. The article according to Claim 10, wherein the thickness of the coating film is from 5 to 10,000 µm.

12. A method for producing a coated article, which comprises forming a primer layer on a substrate and then forming a top coating layer on the primer layer using the powder as defined in any one of Claims 1 to 9, wherein the heat treatment temperature for forming the primer layer is from 80 to 200°C.

13. The method for producing a coated article according to Claim 12, wherein said primer layer consists of a film of a fluororesin containing no composite oxide particles.
